(19) **Europäisches Patentamt / European Patent Office / Office européen des brevets**

(11) **EP 4 729 995 A1**

(12) **EUROPEAN PATENT APPLICATION**

(43) Date of publication:
**22.04.2026 Bulletin 2026/17**

(21) Application number: **25201344.6**

(22) Date of filing: **10.09.2025**

(51) International Patent Classification (IPC):
**G02B 5/18** (2006.01)    **G02B 27/00** (2006.01)
**G02B 27/01** (2006.01)    **G02B 27/42** (2006.01)

(52) Cooperative Patent Classification (CPC):
**G02B 27/4272; G02B 5/1819; G02B 5/1866;**
**G02B 27/0081; G02B 27/0172; G02B 27/4205;**
G02B 5/1842; G02B 2027/0178

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **15.10.2024 CN 202411434873**

(71) Applicant: **Goertek Optical Technology Co., Ltd.**
**Weifang, Shandong 261031 (CN)**

(72) Inventor: **SHEN, Lang**
**Shandong 261031 (CN)**

(74) Representative: **Rau, Schneck & Hübner**
**Patentanwälte Rechtsanwälte PartGmbB**
**Königstraße 2**
**90402 Nürnberg (DE)**

(54) **DIFFRACTIVE OPTICAL STRUCTURE AND OPTICAL DISPLAY DEVICE**

(57) Embodiments of the present disclosure disclose a diffractive optical structure and an optical display device; wherein: the diffractive optical structure includes a substrate (1) and a grating structure (5) provided on the substrate (1), and the grating structure (5) includes a plurality of grating units (51) periodically arranged in a tiled pattern on a surface of the substrate (1) along both a first direction and a second direction; the grating structure (5) has a first grating modulation direction and a second grating modulation direction, the first grating modulation direction is perpendicular to the first direction, and a grating modulation amplitude in the first grating modulation direction is $\Delta E$, $\Delta E = 1/(P_3 * \sin\theta)$, wherein $P_3$ is a period of the grating structure (5) in the second direction, and $\theta$ is an included angle between the first direction and the second direction; light incident on the grating structure produces diffraction only in the first grating modulation direction and does not produce diffraction in the second grating modulation direction.

**FIG.1**

## Description

### TECHNICAL FIELD

The present disclosure relates to the field of augmented reality (AR) technology, and particularly to a diffractive optical structure and an optical display device.

### BACKGROUND

Augmented Reality (AR), as an emerging form of human-computer interaction, demonstrates enormous application potential in fields such as education, entertainment, and industry. Diffractive optical structures, as one of the mainstream technical solutions for realizing AR technology, utilize the total internal reflection of a transparent substrate to conduct images in a lossless manner to the wearer's eyes, achieving the superposition and fusion of the real world and virtual images. In the diffractive optical structures, gratings play a crucial role and are used to control the coupling, propagation, and out-coupling processes of the light. Traditional one-dimensional gratings modulate the diffraction efficiency of the grating by adjusting parameters such as linewidth, depth, and sidewall angle. However, limited by the difficulty and maturity of existing processes, this modulation method is often costly and has limited effectiveness, making it difficult to meet the high requirements of diffractive optical structures for overall efficiency and uniformity.

### SUMMARY

An objective of the present disclosure is to provide technical solutions for a diffractive optical structure and an optical display device.

According to a first aspect of the present disclosure, the present disclosure provides a diffractive optical structure, the diffractive optical structure includes a substrate and a grating structure provided on the substrate, and the grating structure includes a plurality of grating units periodically arranged in a tiled pattern on a surface of the substrate along both a first direction and a second direction;

the grating structure has a first grating modulation direction and a second grating modulation direction, the first grating modulation direction is perpendicular to the first direction, and a grating modulation amplitude in the first grating modulation direction is $\Delta E$, $\Delta E = 1/(P_3 * \sin\theta)$, wherein $P_3$ is a period of the grating structure in the second direction, and $\theta$ is an included angle between the first direction and the second direction;
light incident on the grating structure produces diffraction only in the first grating modulation direction and does not produce diffraction in the second grating modulation direction.

Optionally, a period of the grating structure in the first direction is $P_2$, and $P_2 < P_3$.

Optionally, the included angle $\theta$ between the first direction and the second direction satisfies $0 < \theta \leq 90°$.

Optionally, the diffractive optical structure comprises an in-coupling grating, an out-coupling grating, and a turning grating;
at least one of the in-coupling grating, the out-coupling grating, and the turning grating comprises the grating structure in at least a partial region thereof.

Optionally, at least a partial region of the turning grating is the grating structure; or,

the in-coupling grating and the turning grating are the grating structure; or,
partial regions of the in-coupling grating and the out-coupling grating, and the turning grating are the grating structure.

Optionally, a period $P_2$ of the grating structure in the first direction is less than 300 nm, and light, after being diffracted by the grating structure, produces first-order diffraction only in the first grating modulation direction and does not produce diffraction in the second grating modulation direction.

Optionally, the in-coupling grating adopts the grating structure, and when the grating structure satisfies the following condition, light from at least partial directions within an incident FOV, after being modulated by the grating structure, does not produce diffraction in the second grating modulation direction;

$$\left| \overrightarrow{k_0} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2;$$

wherein $\overrightarrow{k_0}$ is a grating modulation amplitude at any point within the FOV of the grating structure;
$n_2$ is a refractive index of the substrate;

$\dfrac{\vec{z} \times \overrightarrow{P_3}}{\left|\vec{z} \times \overrightarrow{P_3}\right|}$ is the second grating modulation direction.

Optionally, the in-coupling grating adopts the grating structure, and when the grating structure satisfies the following condition, light from at least partial directions within an incident FOV, after being modulated by the grating structure, produces first-order diffraction only in the first grating modulation direction;

$$\left| \overrightarrow{k_0} \pm \frac{\lambda}{P_3 \cdot \sin\theta} \cdot \frac{\vec{z} \times \overrightarrow{P_2}}{\left|\vec{z} \times \overrightarrow{P_2}\right|} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2;$$

wherein $\overrightarrow{k_0}$ is a grating modulation amplitude at any point within the FOV of the grating structure;
$n_2$ is a refractive index of the substrate;

$\dfrac{\vec{z} \times \overrightarrow{P_2}}{\left|\vec{z} \times \overrightarrow{P_2}\right|}$ is the first grating modulation direction;

$\dfrac{\vec{z} \times \overrightarrow{P_3}}{\left|\vec{z} \times \overrightarrow{P_3}\right|}$ is the second grating modulation direction.

Optionally, the turning grating or the out-coupling grating adopts the grating structure, and when the grating structure satisfies the following condition, light from at least partial directions within an incident FOV, after being modulated by the grating structure, does not produce diffraction in the second grating modulation direction;

$$\left| \overrightarrow{k_0} \pm \overrightarrow{k_{IG}} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2;$$

wherein $\overrightarrow{k_0}$ is a grating modulation amplitude at any point within the FOV of the grating structure;
$\overrightarrow{k_{IC}}$ is a grating modulation amplitude of the in-coupling grating;
$n_2$ is a refractive index of the substrate;

$\dfrac{\vec{z} \times \overrightarrow{P_3}}{\left|\vec{z} \times \overrightarrow{P_3}\right|}$ is the second grating modulation direction.

Optionally, the turning grating or the out-coupling grating adopts the grating structure, and when the grating structure satisfies the following condition, light from at least partial directions within an incident FOV, after being modulated by the grating structure, produces first-order diffraction only in the first grating modulation direction;

$$\left| \vec{k_0} \pm \vec{k_{IG}} \pm \frac{\lambda}{P_3 \cdot \sin\theta} \cdot \frac{\vec{z} \times \vec{P_2}}{\left| \vec{z} \times \vec{P_2} \right|} \pm \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2 ;$$

wherein $\vec{k_0}$ is a grating modulation amplitude at any point within the FOV of the grating structure;
$\vec{k_{IC}}$ is a grating modulation amplitude of the in-coupling grating;
$n_2$ is a refractive index of the substrate;

$$\frac{\vec{z} \times \vec{P_2}}{\left| \vec{z} \times \vec{P_2} \right|}$$ is the first grating modulation direction;

$$\frac{\vec{z} \times \vec{P_3}}{\left| \vec{z} \times \vec{P_3} \right|}$$ is the second grating modulation direction.

Optionally, the out-coupling grating adopts the grating structure, and when the grating structure satisfies at least one of the following conditions, light from at least partial directions within an incident FOV, after being modulated by the grating structure, does not produce diffraction in the second grating modulation direction;

$$\left| \vec{k_0} \pm \vec{k_{IG}} \pm \vec{k_{FG}} \pm \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2 ;$$

$$\left| \vec{k_0} \pm \vec{k_{IG}} \pm \vec{k_{FG}} \pm \vec{k_{OG}} \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2 ;$$

$$\left| \vec{k_0} \pm \vec{k_{OG}} \pm \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2 ;$$

wherein $\vec{k_0}$ is a grating modulation amplitude at any point within the FOV of the grating structure;
$\vec{k_{IC}}$ is a grating modulation amplitude of the in-coupling grating;
$\vec{k_{FG}}$ is a grating modulation amplitude of the turning grating;
$\vec{k_{OG}}$ is a grating modulation amplitude of the out-coupling grating;
$n_2$ is a refractive index of the substrate;

$$\frac{\vec{z} \times \vec{P_2}}{\left| \vec{z} \times \vec{P_2} \right|}$$ is the first grating modulation direction;

$$\dfrac{\vec{z} \times \overrightarrow{P_3}}{\left|\vec{z} \times \overrightarrow{P_3}\right|}$$ is the second grating modulation direction.

Optionally, the out-coupling grating adopts the grating structure, and when the grating structure satisfies at least one of the following conditions, light from at least partial directions within an incident FOV, after being modulated by the grating structure, produces first-order diffraction only in the first grating modulation direction;

$$\left| \overrightarrow{k_0} \pm \overrightarrow{k_{IG}} \pm \overrightarrow{k_{FG}} \pm \frac{\lambda}{P_3 \cdot \sin\theta} \cdot \frac{\vec{z} \times \overrightarrow{P_2}}{\left|\vec{z} \times \overrightarrow{P_2}\right|} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2 ;$$

$$\left| \overrightarrow{k_0} \pm \overrightarrow{k_{IG}} \pm \overrightarrow{k_{FG}} \pm \overrightarrow{k_{OG}} \pm \frac{\lambda}{P_3 \cdot \sin\theta} \cdot \frac{\vec{z} \times \overrightarrow{P_2}}{\left|\vec{z} \times \overrightarrow{P_2}\right|} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2 ;$$

$$\left| \overrightarrow{k_0} \pm \overrightarrow{k_{OG}} \pm \frac{\lambda}{P_3 \cdot \sin\theta} \cdot \frac{\vec{z} \times \overrightarrow{P_2}}{\left|\vec{z} \times \overrightarrow{P_2}\right|} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2 ;$$

wherein $\overrightarrow{k_0}$ is a grating modulation amplitude at any point within the FOV of the grating structure;
$\overrightarrow{k_{IC}}$ is a grating modulation amplitude of the in-coupling grating;
$\overrightarrow{k_{FG}}$ is a grating modulation amplitude of the turning grating;
$\overrightarrow{k_{OG}}$ is a grating modulation amplitude of the out-coupling grating;
$n_2$ is a refractive index of the substrate;

$$\dfrac{\vec{z} \times \overrightarrow{P_2}}{\left|\vec{z} \times \overrightarrow{P_2}\right|}$$ is the first grating modulation direction;

$$\dfrac{\vec{z} \times \overrightarrow{P_3}}{\left|\vec{z} \times \overrightarrow{P_3}\right|}$$ is the second grating modulation direction.

Optionally, the grating unit is a columnar structure provided on the surface of the substrate, and a linewidth duty cycle of the grating unit in the first direction is DC, wherein 0 < DC < 1.
Optionally, the grating unit is a hole structure provided on the surface of the substrate, and a linewidth duty cycle of the grating unit in the first direction is DC, wherein 0 < DC < 1.
Optionally, the grating unit comprises one or more sub-gratings.
Optionally, the diffractive optical structure is an optical waveguide device.
According to a second aspect of the present disclosure, embodiments of the present disclosure provide an optical display device, which includes:

an image source; and
the diffractive optical structure according to the first aspect.

An advantageous effect of an embodiment of the present disclosure lies in:
Aiming at the problems of low modulation efficiency, high process cost, and difficulty in comprehensively optimizing overall efficiency and uniformity of one-dimensional gratings in existing diffractive optical technology, the present disclosure innovatively proposes a specially designed grating structure. The grating structure design of the present disclosure, on the basis of maintaining the diffraction mode of the one-dimensional grating unchanged, abandons the complex modulation requirements for the depth or sidewall angle of the grating, and instead by relying on existing low-cost and mature mass-production processes, achieves free modulation of the grating diffraction efficiency over a wide range through flexible adjustment of key parameters of the two-dimensional grating in one dimension. The technical solution provided by the present disclosure greatly enhances the overall optical efficiency and uniformity of the diffractive optical structure, including uniformity of brightness, color, and eyebox, thereby providing a superior optical design solution for augmented reality display technology.

Other features and advantages of the present disclosure will become apparent from the following detailed description of exemplary embodiments of the present disclosure with reference to the accompanying drawings.

## BRIEF DESCRIPTION OF THE DRAWINGS

The accompanying drawings, which are incorporated in the description and constitute a part of the description, illustrate embodiments of the present disclosure and, together with the description thereof, serve to explain the principles of the present disclosure.

FIG. 1 is a first structural schematic diagram of a diffractive optical structure provided by an embodiment of the present disclosure;

FIG. 2 is a second structural schematic diagram of a diffractive optical structure provided by an embodiment of the present disclosure;

FIG. 3 is a third structural schematic diagram of a diffractive optical structure provided by an embodiment of the present disclosure;

FIG. 4 is a fourth structural schematic diagram of a diffractive optical structure provided by an embodiment of the present disclosure;

FIG. 5 is a structural schematic diagram of a conventional one-dimensional grating;

FIG. 6 is a structural schematic diagram of a conventional two-dimensional grating;

FIG. 7 is a first structural schematic diagram of a grating structure provided by an embodiment of the present disclosure;

FIG. 8 is a K-vector diagram of a traditional one-dimensional grating;

FIG. 9 is a first K-vector diagram of a grating structure provided by an embodiment of the present disclosure;

FIG. 10 is a second K-vector diagram of a grating structure provided by an embodiment of the present disclosure;

FIG. 11 is a second structural schematic diagram of a grating structure provided by an embodiment of the present disclosure;

FIG. 12 is a third structural schematic diagram of a grating structure provided by an embodiment of the present disclosure;

FIG. 13 is a fourth structural schematic diagram of a grating structure provided by an embodiment of the present disclosure;

FIG. 14 is a first side view of a grating structure provided by an embodiment of the present disclosure;

FIG. 15 is a second side view of a grating structure provided by an embodiment of the present disclosure;

FIG. 16 is a third side view of a grating structure provided by an embodiment of the present disclosure;

FIG. 17 is a fourth side view of a grating structure provided by an embodiment of the present disclosure;

FIG. 18 is a top view of the grating structure shown in FIG. 15;

FIG. 19 is a second structural schematic diagram of a grating structure provided by an embodiment of the present disclosure;

FIG. 20 is a third structural schematic diagram of a grating structure provided by an embodiment of the present disclosure;

FIG. 21 is a diffraction efficiency diagram of the grating structure shown in FIG. 20;

FIG. 22 is a fourth structural schematic diagram of a grating structure provided by an embodiment of the present disclosure;

FIG. 23 is a diffraction efficiency diagram of the grating structure shown in FIG. 22;

FIG. 24 is a diffraction efficiency diagram within the FOV of a traditional one-dimensional grating;

FIG. 25 is a diffraction efficiency diagram within the FOV of a grating structure provided by the present disclosure;

FIG. 26 is a diffraction efficiency diagram within the FOV of another grating structure provided by the present disclosure.

Description of reference signs:

1. Substrate; 2. In-coupling grating; 3. Out-coupling grating; 4. Turning grating; 5. Grating structure; 51. Grating unit.

## DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

The diffractive optical structure and the optical display device provided by the embodiments of the present disclosure will be described in detail below with reference to the accompanying drawings.

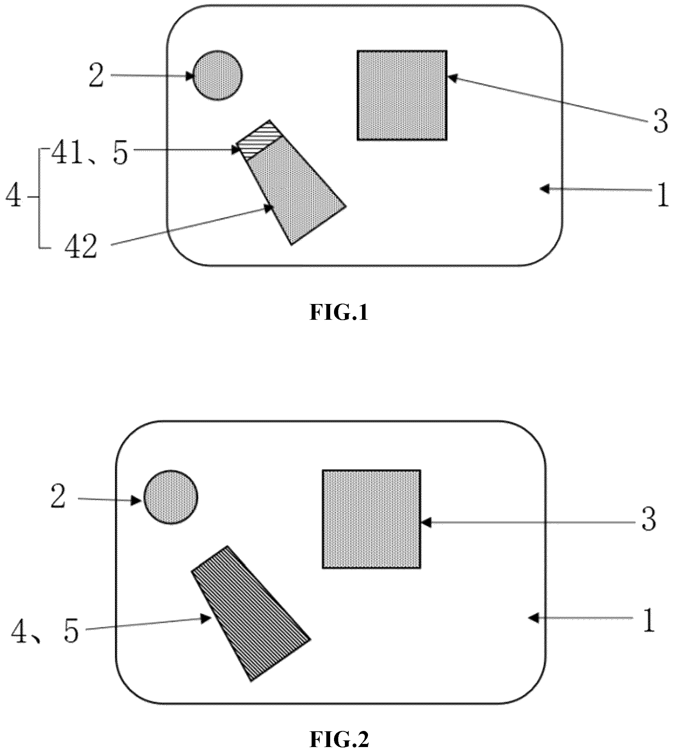

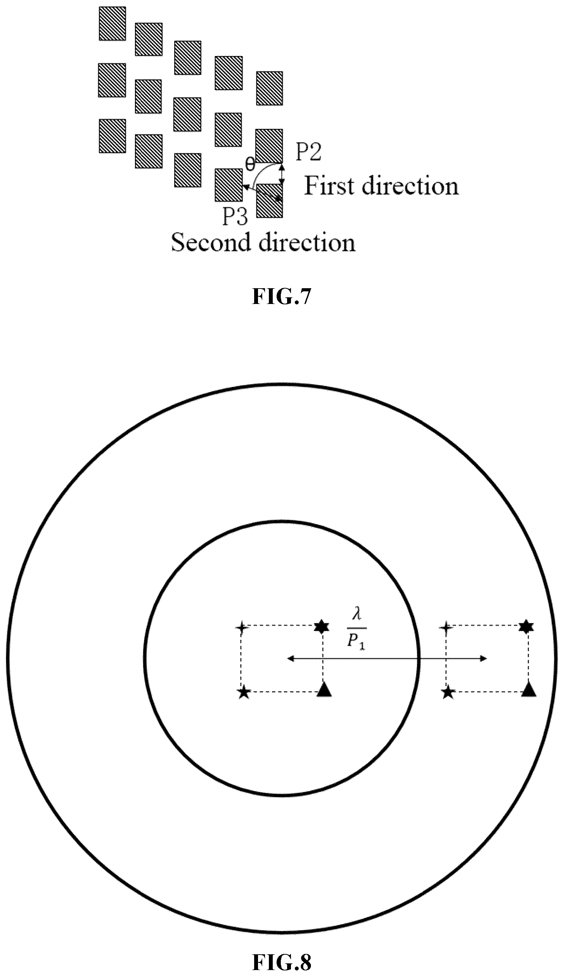

According to an embodiment of the present disclosure, a diffractive optical structure is provided. Referring to FIGS. 1 to 4, the diffractive optical structure includes a substrate 1 and a grating structure 5 provided on the substrate 1; referring to FIG. 7, the grating structure 5 includes a plurality of grating units 51 periodically arranged in a tiled pattern on a surface of the substrate 1 along both a first direction and a second direction; the grating structure 5 has a first grating modulation direction and a second grating modulation direction, the first grating modulation direction is perpendicular to the first direction, and a grating modulation amplitude in the first grating modulation direction is $\Delta E$, $\Delta E = 1/P3*\sin\theta$, wherein P3 is a period of the grating structure 5 in the second direction, and $\theta$ is an included angle between the first direction and the second direction; light incident on the grating structure produces diffraction only in the first grating modulation direction and does not produce diffraction in the second grating modulation direction.

It should be noted that the mentioned "does not produce diffraction in the second grating modulation direction" in the above embodiment refers to the diffraction in the second grating modulation direction being suppressed or minimized.

The diffractive optical structure provided by the embodiment of the present disclosure is, for example, a diffractive optical waveguide device, the grating structure 5 of which can be used for any one or at least one of an in-coupling grating 2, an out-coupling grating 3, and a turning grating 4 on the diffractive optical waveguide device. Referring to FIGS. 1 to 4, this is not limited in the present disclosure.

In augmented reality (AR) technology, diffractive optical waveguide devices are key optical components for image conduction and display. Currently, one-dimensional gratings are widely used in diffractive optical waveguide devices, and modulate their diffraction efficiency by adjusting parameters such as linewidth, depth, and sidewall angle. However, this modulation method is limited by process difficulty and cost, particularly in adjusting depth and sidewall angle, and thus is often difficult to achieve or costly. Furthermore, improving diffraction efficiency solely through linewidth adjustment is limited, affecting the overall efficiency and uniformity of the optical waveguide device.

To overcome the above drawbacks, the embodiment of the present disclosure provides a specially designed grating structure 5. Specifically, this grating structure 5 is structurally similar to a two-dimensional grating in optical design, but its diffraction performance resembles that of a one-dimensional grating.

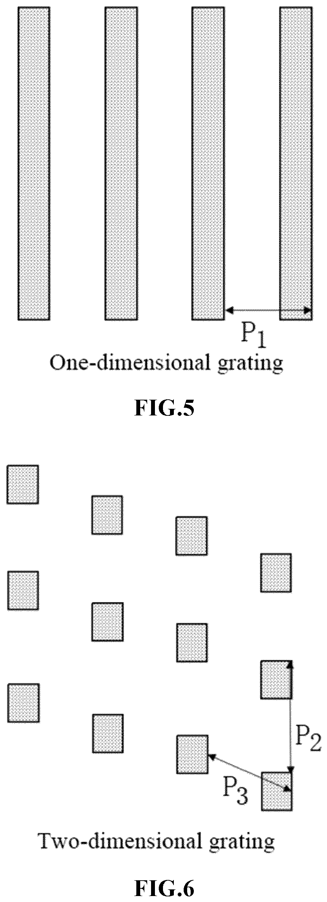

Referring to FIG. 5, it shows the structure of a conventional one-dimensional grating. As can be seen from FIG. 5, a plurality of grating units are arranged periodically in the same direction with a period $P_1$.

Referring to FIG. 6, it shows the structure of a conventional two-dimensional grating. As can be seen from FIG. 6, a plurality of grating units are periodically arranged along two different directions, with a period $P_2$ in one direction and a period $P_3$ in the other direction. Specifically, the direction of period $P_2$ is perpendicular to the direction of period $P_1$ of the one-dimensional grating in FIG. 5, while a repetition period $P_3$ in any one other direction is introduced, thereby constituting a conventional two-dimensional grating structure.

Referring to FIG. 7, the grating structure of the present disclosure introduces a periodic tiled arrangement in a second direction on the basis of maintaining the diffraction mode of a one-dimensional grating, and as shown in FIG. 7, a novel grating unit layout design is formed. This grating design provided by the present disclosure eliminates the need for complex modulation of the depth or sidewall angle of the grating units, but instead achieves more flexible and effective modulation of the diffraction efficiency of the grating structure by adjusting parameters (such as period and linewidth) in the second direction.

Referring to FIG. 7, the grating structure provided by the present disclosure can modulate the grating diffraction efficiency by adjusting parameters in the second direction, such as period $P_3$ and linewidth, while maintaining one-dimensional diffraction characteristics. This modulation method does not rely on adjusting depth or sidewall angle, which is process-intensive, but instead utilizes mature, low-cost processes to significantly improve the overall efficiency and uniformity of brightness, color, and eyebox in the diffractive optical structure.

Compared to the high cost associated with adjusting depth and sidewall angle in the traditional one-dimensional grating, the present disclosure, referring to FIG. 7, reduces process difficulty and cost by adjusting more easily controllable parameters such as period $P_3$ in the second direction, making it easier to achieve mass production and application of this high-performance grating structure.

According to the description in the above embodiments of the present disclosure, light incident on the grating structure produces effective diffraction only in the first grating modulation direction, while diffraction in the second grating modulation direction is suppressed or minimized. This characteristic helps reduce stray light and unwanted diffraction effects, thereby improving quality and clarity of the image.

In summary, the grating structure proposed in the embodiment of the present disclosure demonstrates significant technical advantages in enhancing the overall efficiency and uniformity of the diffractive optical structure, reduces process costs, and increases design flexibility and practicality, thereby providing a new solution for the development of optical display technologies such as augmented reality.

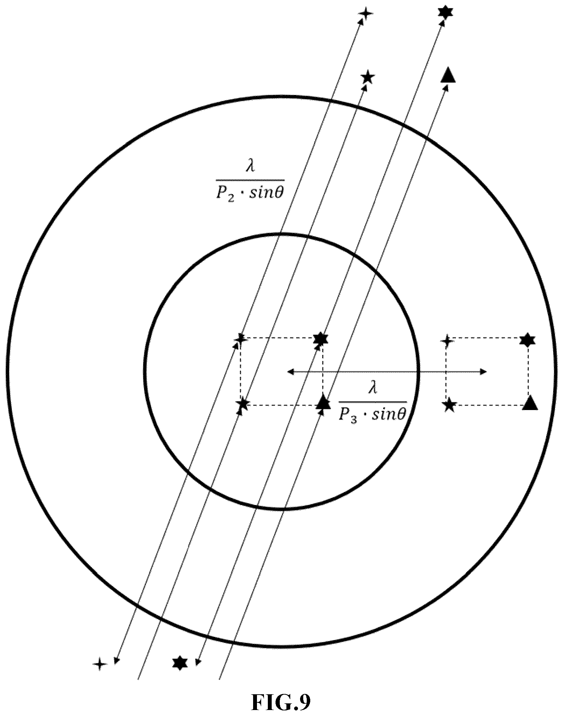

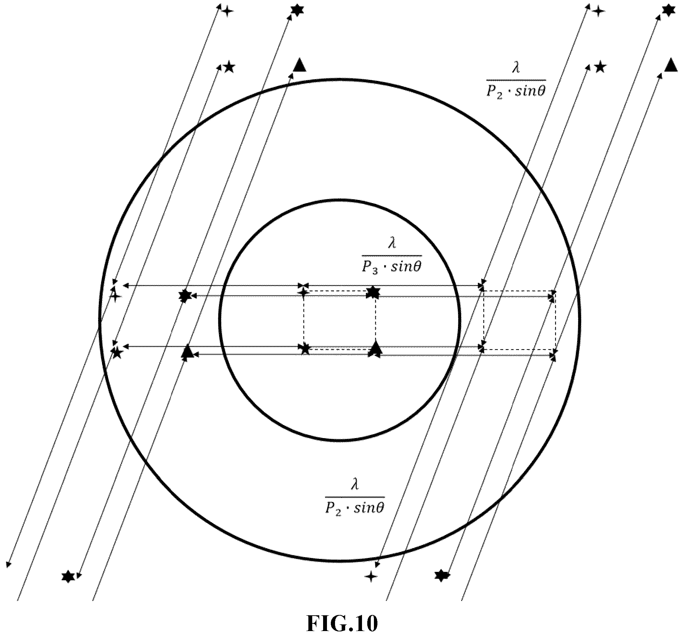

Referring to FIGS. 8 to 10, FIG. 8 shows a K-vector diagram of a conventional one-dimensional grating, while FIG. 9 and FIG. 10 both show K-vector diagrams of the grating structure 5 provided by the embodiment of the present disclosure. Compared to FIG. 8, the length of $\lambda/P_3 \cdot \sin\theta$ shown in FIG. 9 is essentially the same as $\lambda/P_1$ in FIG. 8, which indicates that the grating structure of the present disclosure achieves grating modulation in the $P_2$ direction, thereby producing diffraction. FIG. 9 also shows four oblique lines, which are the four oblique lines extending from the four vertices of the rectangular dashed box in the figure, and all four oblique lines are shifted outside the outermost circle, indicating that no diffraction exists in the other dimension of the grating structure 5. The difference between FIG. 10 and FIG. 9 is that the grating structure 5 does not directly modulate the incident light, meaning the grating structure 5 is not applied to the in-coupling grating of the diffractive optical structure, but instead, the light after being modulated is incident on the grating structure 5 for further modulation. It can be seen that in FIG. 10, eight oblique lines are also shifted outside the outermost circle, indicating that no diffraction exists in the other dimension of the grating structure 5.

In some examples of the present disclosure, referring to FIG. 7, a period of the grating structure 5 in the first direction is $P_2$, and $P_2 < P_3$.

According to the diffractive optical structure provided by the embodiment of the present disclosure, the grating structure 5 exhibits periodic differences in two directions.

In grating design, the period is a key parameter and directly affects the diffraction characteristics of the grating.

In the diffractive optical structure provided by the embodiment of the present disclosure, the grating structure has two grating modulation directions: a first grating modulation direction and a second grating modulation direction; Specifically, the first grating modulation direction is the intended direction for normal diffraction operation, while the second grating modulation direction is an ineffective direction, and no diffraction occurs for light. It should be noted that the first grating modulation direction is influenced by the period $P_2$ in the first direction, and the second grating modulation direction is influenced by the period $P_3$ in the second direction.

In the grating structure of the present disclosure, the period P2 in the first direction being less than the period P3 in the second direction can lead to stronger diffraction or interference effects in the first direction. This is because a denser period means that more grating lines interact with the light.

Regarding the diffraction performance of the grating structure of the present disclosure, a specific analysis is as follows:

Light incident on the grating structure produces significant diffraction only in the first grating modulation direction (related to $P_2$), while diffraction in the second grating modulation direction (related to $P_3$) is suppressed or minimized. This design helps achieve more precise and efficient optical control.

Specifically, the grating structure provided by the embodiment of the present disclosure can enhance diffraction efficiency, as specifically demonstrated by the following: the period $P_2$ in the first direction makes the diffraction of the light in this direction more intense and effective, which benefits the light energy transmission efficiency of the optical waveguide device during in-coupling, out-coupling, or turning processes. The grating structure provided by the embodiment of the present disclosure can also optimize optical performance, as specifically demonstrated by the following: the period $P_3$ in the second direction effectively suppresses diffraction in unintended directions, which reduces stray light and energy loss and improves clarity and contrast of the image. By optimizing the periods in both directions, the solution of the present disclosure achieves fine control over the grating diffraction efficiency on the basis of maintaining the basic diffraction characteristics of a one-dimensional grating, thereby enhancing the uniformity of the diffractive optical structure in terms of brightness, color, eyebox, and other aspects.

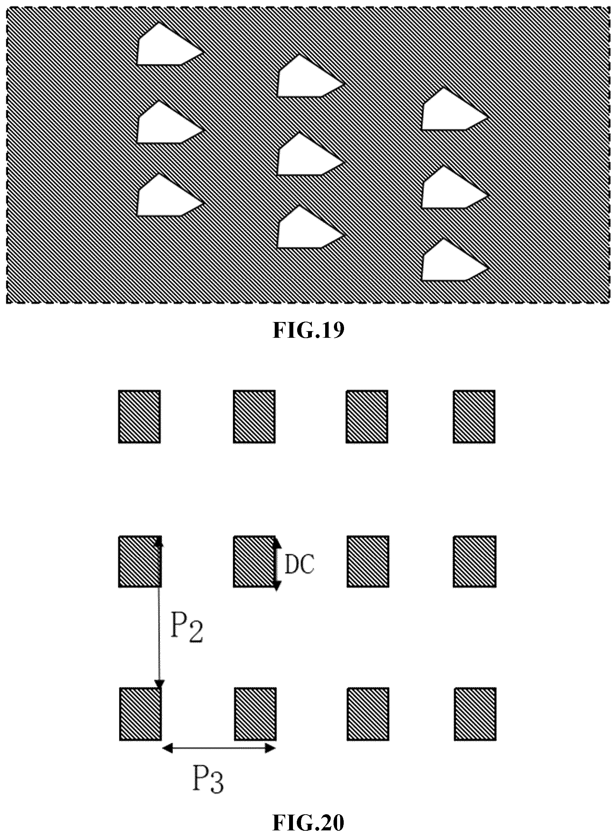

In some examples of the present disclosure, referring to FIGS. 7 and 20, the included angle $\theta$ between the first direction and the second direction satisfies $0 < \theta \le 90°$.

The grating structure 5 has a period $P_2$ in the first direction and a period $P_3$ in the second direction, and a certain included angle $\theta$ is formed between the first direction and the second direction. The design of this included angle $\theta$ allows a

flexible layout of the grating structure in the plane, thereby adapting to the requirements of different optical systems. By adjusting the value of this included angle $\theta$, it is also possible to control the diffraction intensity of the grating structure 5 in different directions to some extent, thereby optimizing the propagation path of the light.

When the included angle $\theta$ is within the above range, the diffraction of the grating structure in the two directions will exhibit different characteristics. The first direction (the direction of period $P_2$) will dominate the main diffraction effects, while the second direction (the direction of period $P_3$) may be used for fine diffraction adjustment or suppression.

Furthermore, the setting of the included angle $\theta$ increases the design freedom of the grating structure. Depending on the specific application scenario and performance requirements, it is possible to flexibly adjust the layout and parameters of the grating to achieve optimal optical effects.

According to the range of the included angle $\theta$ between the first direction and the second direction mentioned in this example of the present disclosure, it is possible to achieve precise control of the diffraction direction. Specifically, by reasonably adjusting the value of $\theta$ within this range, it is possible to precisely control the diffraction direction of the grating, allowing light to propagate along a predetermined path. Moreover, the rational design of the included angle $\theta$ helps balance the diffraction effects in the two directions, reduce unnecessary diffraction losses, and improve clarity of the image. The optimization of this included angle $\theta$ enables the grating structure to couple light into or out of the diffractive optical structure more efficiently, thereby enhancing the overall efficiency of the diffractive optical structure.

In summary, the setting range of the included angle $\theta$ between the first direction and the second direction in the examples of the present disclosure ($0 < \theta \leq 90°$) is a design choice with high flexibility and optimized space, which may achieve fine-tuning of optical performance through adjustment of the included angle $\theta$ while ensuring the basic diffraction characteristics of the grating, thereby improving the overall efficiency and optical performance of the diffractive optical structure.

According to some examples of the present disclosure, referring to FIGS. 1 to 4, the diffractive optical structure includes an in-coupling grating 2, an out-coupling grating 3, and a turning grating 4; at least one of the in-coupling grating 2, the out-coupling grating 3, and the turning grating 4 includes the grating structure in at least a partial region thereof.

The diffractive optical structure provided by the embodiment of the present disclosure, referring to FIGS. 1 to 4, integrates the in-coupling grating 2, the out-coupling grating 3, and the turning grating 4 on the substrate 1. These functional gratings play critical roles in the diffractive optical structure.

Specifically, the in-coupling grating 2 is responsible for efficiently coupling light projected from an external source into the interior of the substrate 1, the out-coupling grating 3 couples the light out of the substrate 1 to the wearer/user's eyes, and the turning grating 4 is located in the optical path between the in-coupling grating 2 and the out-coupling grating 3 and is used to alter the propagation direction of the light to achieve pupil expansion or redirection of the image.

In this example of the present disclosure, partial or all regions of at least one functional grating (such as the in-coupling grating 2, the out-coupling grating 3, or the turning grating 4) on the substrate 1 adopts the grating structure 5. This structure, by adjusting parameters such as linewidth, groove width, and period in one dimension, can significantly improve the diffraction efficiency of the grating without adding process complexity, and optimize the overall efficiency and uniformity of the diffractive optical structure.

Due to the optimization of the grating structure 5, the entire diffractive optical structure can utilize light energy more effectively during the in-coupling, out-coupling, and turning processes, reduce energy loss, and improve the brightness, color uniformity, and eyebox uniformity of the image.

The optimized grating structure significantly enhances the diffraction efficiency of the light during the in-coupling, out-coupling, and turning processes, thereby improving the overall utilization of the light energy and making the diffractive optical structure brighter and clearer in display.

According to the diffractive optical structure provided by the embodiment of the present disclosure, at least one of the in-coupling grating 2, the out-coupling grating 3, and the turning grating 4 adopts the grating structure provided by the present disclosure in at least a partial region thereof, which may enhance imaging quality, this is because the optimized grating structure reduces stray light and unnecessary diffraction losses, and improves clarity and contrast of the image, such that the fusion of virtual images with the real world is more natural and realistic.

The efficient diffractive optical structure enables the optical waveguide device to achieve better uniformity in aspects such as brightness, color, and eyebox, reduces visual fatigue and discomfort, and enhances the overall experience of the user when using augmented reality devices.

The design of the diffractive optical structure in the example of the present disclosure, by integrating the optimized grating structure 5, it is possible to significantly improve the overall performance of the diffractive optical structure and the user experience. This design not only enhances light energy utilization and image quality but also reduces production costs and process difficulty, thereby providing support for the development of augmented reality technology.

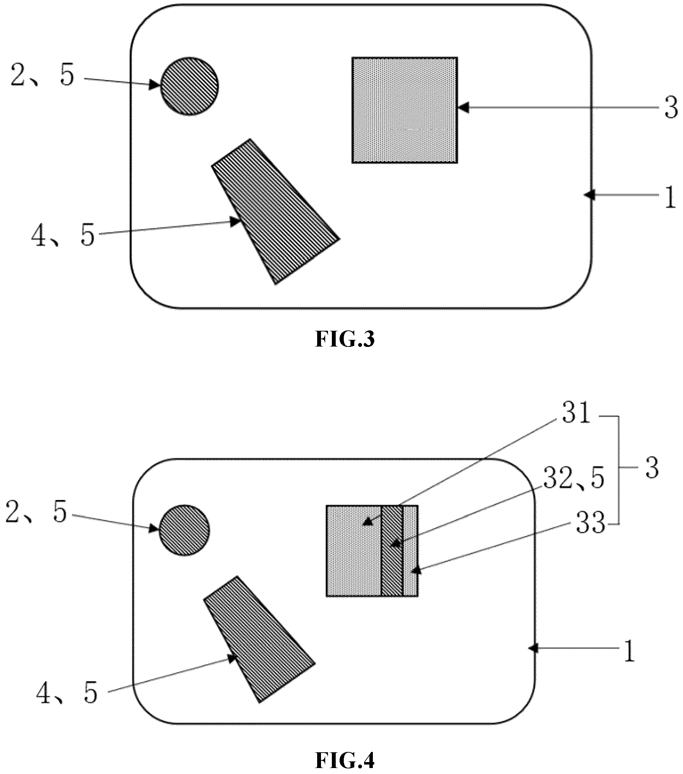

In some examples of the present disclosure, referring to FIGS. 1 and 2, at least a partial region of the turning grating 4 is the grating structure 5; or, referring to FIG. 3, the in-coupling grating 2 and the turning grating 4 are the grating structure 5; or, referring to FIG. 4, partial regions of the in-coupling grating 2 and the out-coupling grating 3, and the turning grating 4 are the grating structure 5.

In one example, referring to FIG. 1, the turning grating 4 includes a first region 41 and a second region 42, wherein the first region 41 is configured as the grating structure 5.

In one example, referring to FIG. 2, the turning grating 4 is configured as the grating structure 5 as a whole.

In the above two approaches, referring to FIGS. 1 and 2, partial or all regions of the turning grating 4 adopts the grating structure 5. This design enables more effective utilization of the diffraction characteristics of the grating structure when light is turned inside the diffractive optical structure, and controls the turning angle and intensity distribution of the light.

The optimized grating structure 5 can reduce energy loss during the turning of the light, and improve turning efficiency, such that the image remains clear and bright over a wider field of view. By precisely controlling the diffraction of the turning grating 4, it is possible to improve the uniformity of the eyebox of the diffractive optical structure, thereby ensuring consistent image quality from different viewing angles.

In one example, referring to FIG. 3, both the in-coupling grating 2 and the turning grating 4 adopt the grating structure 5. This design not only optimizes the in-coupling efficiency of the light but also enhances the turning performance of the light inside the diffractive optical structure.

Through dual optimization of the in-coupling grating 2 and the turning grating 4, the diffractive optical structure can maintain higher overall efficiency during conduction and turning of the light, thereby improving uniformity of the brightness and color of the image. By optimizing the turning grating 4, it is possible to expand the field of view range of the diffractive optical structure.

In one example, referring to FIG. 4, the in-coupling grating 2, a partial region of the out-coupling grating 3, and the turning grating 4 are the grating structure 5. Specifically, the out-coupling grating 3 includes a first region 31, a second region 32, and a third region 33, and the second region 32 is located between the first region 31 and the third region 33 and is the grating structure 5. This comprehensive optimization design ensures that the diffractive optical structure can achieve optimal performance during the in-coupling, conduction, turning, and out-coupling of the light.

Due to the comprehensive optimization of the in-coupling grating 2, out-coupling grating 3, and turning grating 4, the diffractive optical structure achieves significant improvements in aspects such as brightness, color uniformity, eyebox uniformity, and field of view. The highly efficient diffractive optical structure enables augmented reality devices to display images with greater clarity, naturalness, and comfort, substantially enhancing the user's visual experience.

According to the above example, the present disclosure enhances the performance of the diffractive optical structure by flexibly applying the grating structure 5 to different functional grating sections of the diffractive optical structure. Whether optimizing the turning grating alone, simultaneously optimizing the in-coupling grating and turning grating, or comprehensively optimizing the in-coupling, out-coupling, and turning gratings, each approach can enhance the efficiency, uniformity, and user experience of the diffractive optical structure to varying degrees.

In some examples of the present disclosure, a period $P_2$ of the grating structure 5 in the first direction is less than 300 nm, and light, after being diffracted by the grating structure 5, produces first-order diffraction only in the first grating modulation direction and does not produce diffraction in the second grating modulation direction.

Regarding the diffractive optical structure provided by the present disclosure, the grating structure 5 thereof needs not only to satisfy the specific optical relationship - the first grating modulation direction is perpendicular to the first direction, and the grating modulation amplitude in the first grating modulation direction is $\Delta E$, with $\Delta E = 1/(P_3 {}^* \sin\theta)$, but also to meet the condition specified in this example of the present disclosure, namely, the constraint on the period $P_2$ of the grating structure 5 in the first direction. Only in this way can it be fully ensured that the grating structure 5 has only one direction functioning as a grating modulation direction of the effective diffractive work, while the other direction is an ineffective direction.

Furthermore, the period $P_2$ of the grating structure 5 in the first direction is less than 250 nm.

Even further, the period $P_2$ of the grating structure 5 in the first direction is less than 200 nm.

In a specific example of the present disclosure, the in-coupling grating 2 adopts the grating structure 5, and when the grating structure 5 satisfies the following condition, light from at least partial directions within an incident FOV, after being modulated by the grating structure 5, does not produce diffraction in the second grating modulation direction;

$$\left| \vec{k_0} \pm \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} {}^* n_2;$$

wherein $\vec{k_0}$ is a grating modulation amplitude at any point within the FOV of the grating structure 5;

$n_2$ is a refractive index of the substrate 1;

$$\frac{\vec{z} \times \overrightarrow{P_3}}{\left| \vec{z} \times \overrightarrow{P_3} \right|}$$ is the second grating modulation direction.

In a specific example of the present disclosure, the in-coupling grating 2 adopts the grating structure 5, and when the grating structure 5 satisfies the following condition, light from at least partial directions within an incident FOV, after being modulated by the grating structure 5, produces first-order diffraction only in the first grating modulation direction;

$$\left| \vec{k_0} \pm \frac{\lambda}{P_3 \cdot \sin\theta} \cdot \frac{\vec{z} \times \overrightarrow{P_2}}{\left| \vec{z} \times \overrightarrow{P_2} \right|} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\vec{k_0}$ is a grating modulation amplitude at any point within the FOV of the grating structure 5;

$n_2$ is a refractive index of the substrate 1;

$$\frac{\vec{z} \times \overrightarrow{P_2}}{\left| \vec{z} \times \overrightarrow{P_2} \right|}$$ is the first grating modulation direction;

$$\frac{\vec{z} \times \overrightarrow{P_3}}{\left| \vec{z} \times \overrightarrow{P_3} \right|}$$ is the second grating modulation direction.

In a specific example of the present disclosure, the turning grating 4 or the out-coupling grating 3 adopts the grating structure 5, and when the grating structure 5 satisfies the following condition, light from at least partial directions within an incident FOV, after being modulated by the grating structure 5, does not produce diffraction in the second grating modulation direction;

$$\left| \vec{k_0} \pm \overrightarrow{k_{IG}} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\vec{k_0}$ is a grating modulation amplitude at any point within the FOV of the grating structure 5;
$\overrightarrow{k_{IC}}$ is a grating modulation amplitude of the in-coupling grating 2;
$n_2$ is a refractive index of the substrate 1;

$$\frac{\vec{z} \times \overrightarrow{P_3}}{\left| \vec{z} \times \overrightarrow{P_3} \right|}$$ is the second grating modulation direction.

In a specific example of the present disclosure, the turning grating 4 or the out-coupling grating 3 adopts the grating structure 5, and when the grating structure 5 satisfies the following condition, light from at least partial directions within an incident FOV, after being modulated by the grating structure 5, produces first-order diffraction only in the first grating modulation direction;

$$\left| \overrightarrow{k_0} \pm \overrightarrow{k_{IG}} \pm \frac{\lambda}{P_3 \cdot \sin\theta} \cdot \frac{\vec{z} \times \overrightarrow{P_2}}{\left| \vec{z} \times \overrightarrow{P_2} \right|} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\overrightarrow{k_0}$ is a grating modulation amplitude at any point within the FOV of the grating structure 5;

$\overrightarrow{k_{IC}}$ is a grating modulation amplitude of the in-coupling grating 2;

$n_2$ is a refractive index of the substrate 1;

$\dfrac{\vec{z} \times \overrightarrow{P_2}}{\left| \vec{z} \times \overrightarrow{P_2} \right|}$ is the first grating modulation direction;

$\dfrac{\vec{z} \times \overrightarrow{P_3}}{\left| \vec{z} \times \overrightarrow{P_3} \right|}$ is the second grating modulation direction.

In a specific example of the present disclosure, the out-coupling grating 3 adopts the grating structure, and when the grating structure 5 satisfies at least one of the following conditions, light from at least partial directions within an incident FOV, after being modulated by the grating structure 5, does not produce diffraction in the second grating modulation direction;

$$\left| \overrightarrow{k_0} \pm \overrightarrow{k_{IG}} \pm \overrightarrow{k_{FG}} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

$$\left| \overrightarrow{k_0} \pm \overrightarrow{k_{IG}} \pm \overrightarrow{k_{FG}} \pm \overrightarrow{k_{OG}} \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

$$\left| \overrightarrow{k_0} \pm \overrightarrow{k_{OG}} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\overrightarrow{k_0}$ is a grating modulation amplitude at any point within the FOV of the grating structure 5;

$\overrightarrow{k_{IC}}$ is a grating modulation amplitude of the in-coupling grating 2;

$\overrightarrow{k_{FG}}$ is a grating modulation amplitude of the turning grating 4;

$\overrightarrow{k_{OG}}$ is a grating modulation amplitude of the out-coupling grating 3;

$n_2$ is a refractive index of the substrate 1; $\quad \dfrac{\vec{z} \times \overrightarrow{P_2}}{\left| \vec{z} \times \overrightarrow{P_2} \right|}$ is the first grating modulation direction;

$\dfrac{\vec{z} \times \overrightarrow{P_3}}{\left| \vec{z} \times \overrightarrow{P_3} \right|}$ is the second grating modulation direction.

In a specific example of the present disclosure, the out-coupling grating 3 adopts the grating structure, and when the grating structure 5 satisfies at least one of the following conditions, light from at least partial directions within an incident FOV, after being modulated by the grating structure 5, produces first-order diffraction only in the first grating modulation direction;

$$\left| \overrightarrow{k_0} \pm \overrightarrow{k_{IG}} \pm \overrightarrow{k_{FG}} \pm \frac{\lambda}{P_3 \cdot \sin\theta} \cdot \frac{\vec{z} \times \overrightarrow{P_2}}{\left|\vec{z} \times \overrightarrow{P_2}\right|} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2;$$

$$\left| \overrightarrow{k_0} \pm \overrightarrow{k_{IG}} \pm \overrightarrow{k_{FG}} \pm \overrightarrow{k_{OG}} \pm \frac{\lambda}{P_3 \cdot \sin\theta} \cdot \frac{\vec{z} \times \overrightarrow{P_2}}{\left|\vec{z} \times \overrightarrow{P_2}\right|} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2;$$

$$\left| \overrightarrow{k_0} \pm \overrightarrow{k_{OG}} \pm \frac{\lambda}{P_3 \cdot \sin\theta} \cdot \frac{\vec{z} \times \overrightarrow{P_2}}{\left|\vec{z} \times \overrightarrow{P_2}\right|} \pm \frac{\lambda}{P_2 \cdot \sin\theta} \cdot \frac{\vec{z} \times \overrightarrow{P_3}}{\left|\vec{z} \times \overrightarrow{P_3}\right|} \right| > \frac{2\pi}{\lambda} * n_2;$$

wherein $\overrightarrow{k_0}$ is a grating modulation amplitude at any point within the FOV of the grating structure 5;
$\overrightarrow{k_{IC}}$ is a grating modulation amplitude of the in-coupling grating 2;
$\overrightarrow{k_{FG}}$ is a grating modulation amplitude of the turning grating 4;
$\overrightarrow{k_{OG}}$ is a grating modulation amplitude of the out-coupling grating 3;
$n_2$ is a refractive index of the substrate 1;

$$\frac{\vec{z} \times \overrightarrow{P_2}}{\left|\vec{z} \times \overrightarrow{P_2}\right|}$$ is the first grating modulation direction;

$$\frac{\vec{z} \times \overrightarrow{P_3}}{\left|\vec{z} \times \overrightarrow{P_3}\right|}$$ is the second grating modulation direction.

It should be noted that when not fully satisfying any one of the above six specific conditions, the diffraction efficiency in the second direction (the direction of the period $P_3$) perpendicular to the grating structure can still be suppressed through optimization methods to achieve modulation effects on optical efficiency and uniformity. Specifically, this approach can achieve relatively low k4 diffraction efficiency.

The grating structure 5 of the present disclosure imposes no restrictions on the shape of the repeating grating units 51, and the grating units 51 may be of any shape.

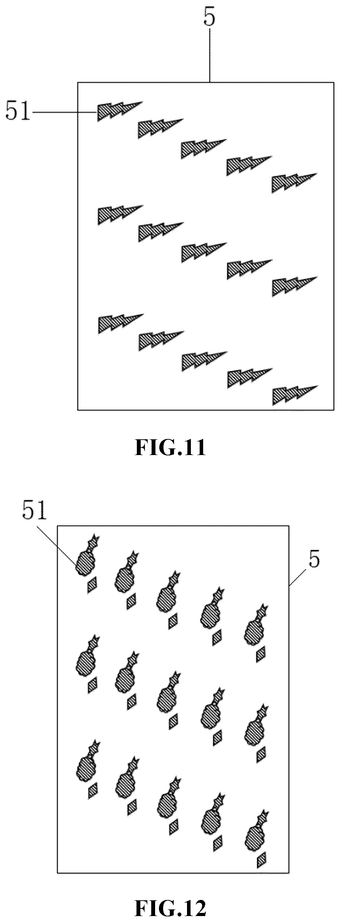

For example, referring to FIGS. 11 to 13, the grating units 51 may be a polygon, a curved shape, at any rotational angle or a combination and interconnection of a plurality of units.

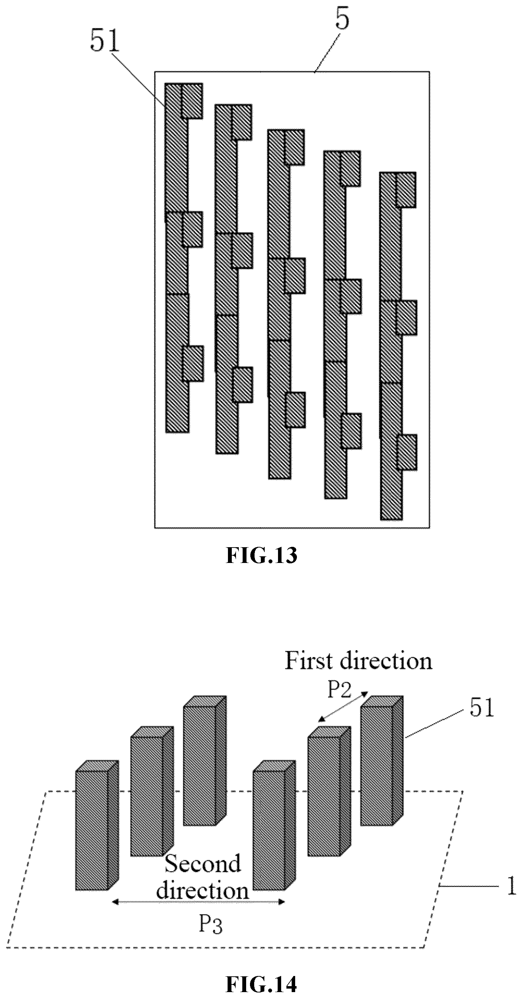

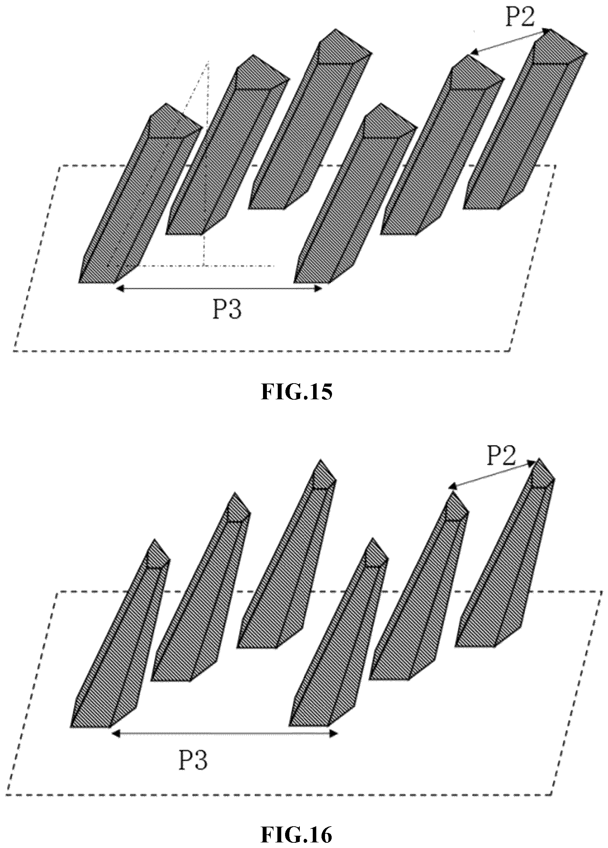

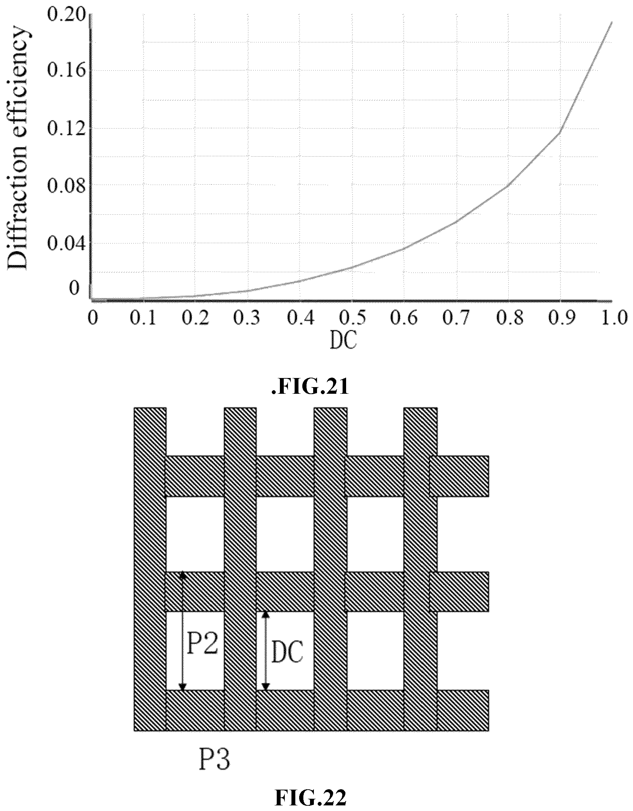

In some examples of the present disclosure, referring to FIGS. 14 to 17, the grating unit 51 is a columnar structure provided on the surface of the substrate 1, and a linewidth duty cycle of the grating unit 51 in the first direction (the direction of the period $P_2$) is DC, wherein $0 < DC < 1$, see FIGS. 20 and 22.

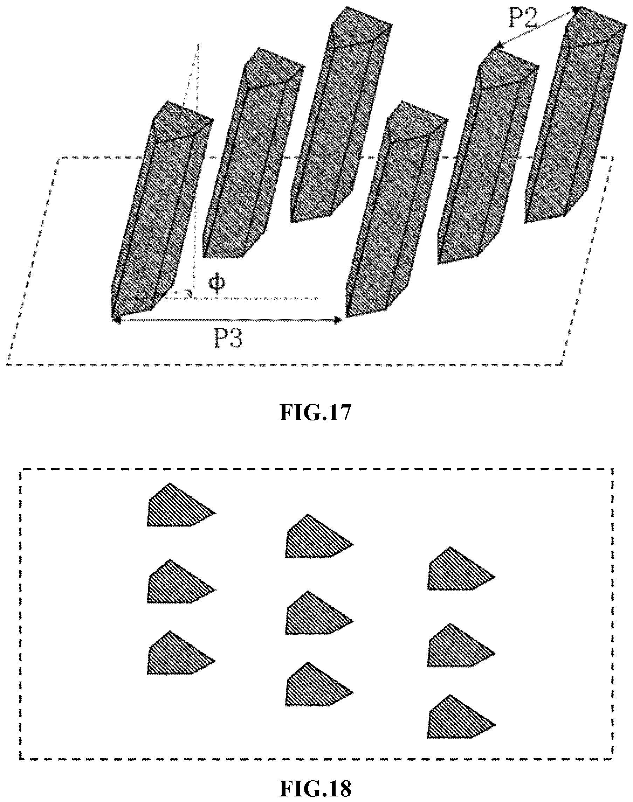

Referring to FIG. 14 to FIG. 17, from a side view perspective, the shape of the grating unit 51 is also not limited. It may be a vertical column, an inclined column, a column with a taper angle, or a curved column, among other diverse forms. Additionally, these columnar structures can be rotated around the z-axis by any angle $\varphi$ in the xy-plane (see FIG. 17), thereby providing a high degree of design flexibility.

Regarding the linewidth duty cycle DC: This is an important parameter, and determines the ratio of the width of the grating unit 51 in the first direction to the entire period.

Referring to FIG. 20, by adjusting the linewidth duty cycle DC of the grating unit 51 in the first direction (the direction of period $P_2$), its diffraction efficiency can be effectively modulated, see FIG. 21. This is because changes in the linewidth duty cycle directly affect the diffraction of light waves by the grating, thereby allowing finer control of the light in specific directions.

According to this example of the present disclosure, the value of DC ranges between 0 and 1, enabling the plurality of grating units 51 to form a periodic arrangement along two different directions. Referring to FIG. 20, if DC = 1, the grating units 51 in the first direction (the direction of period $P_2$) are connected to form strips, ultimately resulting in a one-dimensional grating.

In this example of the present disclosure, by precisely controlling the shape of the grating unit 51 and setting the linewidth duty cycle in the periodic direction, the efficiency and uniformity of the waveguide can be further improved. This is particularly important for applications requiring high efficiency and uniform light distribution.

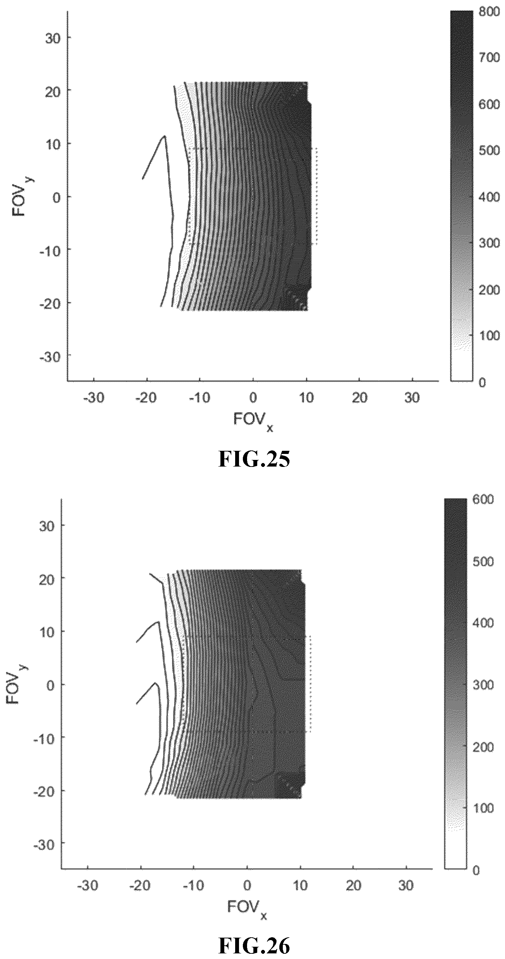

Since the linewidth duty cycle of the grating unit 51 in the first direction is adjustable, asymmetric grating structures can be achieved, as shown in FIG. 25 and FIG. 26. This asymmetry is highly useful for certain specific applications (such as those requiring enhancement or reduction of light intensity in specific directions).

In summary, the design of the grating unit 51 in this example of the present disclosure, by adjusting the linewidth duty cycle DC in the first direction (the direction of period $P_2$), provides fine control over diffraction efficiency, increases design flexibility, improves the efficiency and uniformity of the diffractive optical structure, and simultaneously enables asymmetric grating structures.

In some examples of the present disclosure, referring to FIG. 19, the grating unit 51 is a hole structure provided on the surface of the substrate 1, and referring to FIG. 22, a linewidth duty cycle of the grating unit 51 in the first direction is DC, wherein 0 < DC < 1.

Similarly, on the substrate 1, the grating unit 51 is not limited to a columnar structure and can be correspondingly replaced with a two-dimensionally arranged hole structure.

Specifically, referring to FIG. 18 and FIG. 19, FIG. 18 shows a top view of the grating unit 51 with a columnar structure, while FIG. 19 replaces the columnar structure grating unit 51 in FIG. 18 with a hole structure corresponding to its cross-sectional shape. The hole-structured design of the grating unit 51 further expands the possibilities of the design. Such design freedom enables the grating unit 51 to meet the needs of various complex optical applications.

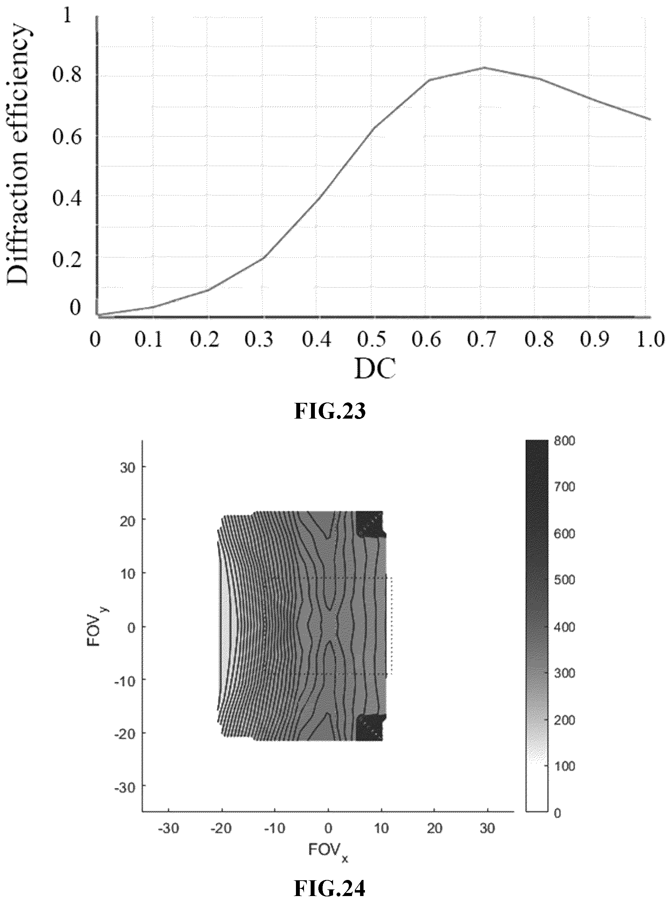

Referring to FIG. 23, when DC ranges from 0 to 0.7, the diffraction efficiency of the grating structure 5 generally shows a gradually increasing trend, while between 0.7 and 1, the diffraction efficiency of the grating structure 5 slightly decreases.

In some examples of the present disclosure, the grating unit 51 includes one or more sub-gratings.

In this example of the present disclosure, referring to FIG. 7 and FIG. 11 to FIG. 13, the grating unit 51 is designed to include one or more sub-gratings. This indicates that each grating unit 51 is not limited to a single shape but can be composed of two or more sub-gratings of different shapes, as shown in FIG. 12.

Specifically, by combining sub-gratings of different shapes and sizes, referring to FIG. 12, it is possible to design a variety of different optical effects. This makes the grating structure 5 more flexible and versatile in addressing various application scenarios, allowing the performance of the grating to be adjusted and optimized according to practical needs.

When the grating unit 51 includes a plurality of different sub-gratings, since the sub-gratings have respective independent diffraction characteristics, it is also possible to precisely control the diffraction efficiencies of the gratings in different directions by combining them. This facilitates the realization of more complex diffraction patterns to meet specific optical requirements.

In some cases, manufacturing a single large grating unit with a complex shape may face significant technical problems. By decomposing a large grating unit into a plurality of simple sub-gratings, it is possible to reduce the manufacturing difficulty, improve production efficiency, and enhance yield.

For light of different wavelengths or polarization states, different sub-gratings may exhibit distinct response characteristics. By combining the plurality of sub-gratings, it is possible to design a grating with good adaptability to various light conditions, thereby broadening the application scope of the grating.

Referring to FIG. 24, it shows that a conventional one-dimensional grating (see the structure shown in FIG. 5) provides symmetric adjustment capability within its field of view (FOV) range.

The grating structure 5 provided by the embodiment of the present disclosure aims to further optimize the performance of the conventional one-dimensional grating. This solution can significantly enhance diffraction efficiency within the FOV range of the grating structure 5. Furthermore, referring to FIG. 25 and FIG. 26, the grating structure 5 of the present disclosure provides the ability to perform fine asymmetric adjustments within the FOV, enabling higher waveguide efficiency and uniformity.

Specifically, compared to the conventional one-dimensional grating design, referring to FIG. 24, it exhibits nearly symmetric characteristics in the image. However, the improved grating structure 5, referring to FIG. 25 and FIG. 26, achieves an asymmetric effect in the vertical direction, and the diffraction efficiency in the upper-right corner region is significantly enhanced and indicated by darker black, indicating a substantial improvement in the optical performance of this region.

According to another embodiment of the present disclosure, an optical display device is provided. The optical display device includes an image source and the diffractive optical structure described above.

Light emitted from the image source can be incident on the in-coupling grating 2 of the diffractive optical structure.

Specifically, the image source is, for example, a projection light engine.

Specifically, the diffractive optical structure is, for example, a diffractive optical waveguide.

The optical display device provided by the embodiment of the present disclosure is, for example, an AR smart head-mounted device. Furthermore, the AR smart head-mounted device may be, for example, AR smart glasses or an AR smart helmet.

Specific implementations of the optical display device of the embodiments of the present disclosure may refer to the various embodiments of the diffractive optical structure described above, and thus inherits all the advantageous effects brought by the technical solutions of the above embodiments, which will not be repeated herein.

The above embodiments focus on the differences between the various embodiments, and the different optimization features between the various embodiments, as long as they do not contradict each other, may be combined to form a better embodiment, which will not be repeated herein, taking into account the brevity of the text.

Embodiments:

Embodiment 1. A diffractive optical structure, comprising a substrate and a grating structure provided on the substrate, the grating structure comprising a plurality of grating units periodically arranged in a tiled pattern on a surface of the substrate along both a first direction and a second direction;

the grating structure has a first grating modulation direction and a second grating modulation direction, the first grating modulation direction is perpendicular to the first direction, and a grating modulation amplitude in the first grating modulation direction is $\Delta E$, $\Delta E = 1/(P_3 * \sin\theta)$, wherein $P_3$ is a period of the grating structure in the second direction, and $\theta$ is an included angle between the first direction and the second direction;

light incident on the grating structure produces diffraction only in the first grating modulation direction and does not produce diffraction in the second grating modulation direction.

Embodiment 2. The diffractive optical structure according to embodiment 1, wherein a period of the grating structure in the first direction is $P_2$, and $P_2 < P_3$.

Embodiment 3. The diffractive optical structure according to embodiment 1 or 2, wherein the included angle $\theta$ between the first direction and the second direction satisfies $0 < \theta \leq 90°$.

Embodiment 4. The diffractive optical structure according to any one of embodiments 1 to 3, wherein the diffractive optical structure comprises an in-coupling grating, an out-coupling grating, and a turning grating;

at least one of the in-coupling grating, the out-coupling grating, and the turning grating comprises the grating structure in at least a partial region thereof.

Embodiment 5. The diffractive optical structure according to any one of embodiments 1 to 4, wherein at least a partial region of the turning grating is the grating structure; or,

the in-coupling grating and the turning grating are the grating structure; or,

the in-coupling grating, a partial region of the out-coupling grating, and the turning grating are the grating structure.

Embodiment 6. The diffractive optical structure according to any one of embodiments 1 to 5, wherein a period $P_2$ of the grating structure in the first direction is less than 300 nm, and light, after being diffracted by the grating structure, produces first-order diffraction only in the first grating modulation direction and does not produce diffraction in the second grating modulation direction.

Embodiment 7. The diffractive optical structure according to any one of embodiments 1 to 6, wherein the in-coupling grating adopts the grating structure, and when the grating structure satisfies the following condition, light from at least partial directions within an incident FOV, after being modulated by the grating structure, does not produce diffraction in the second grating modulation direction;

$$\left| \vec{k_0} \pm \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2;$$

wherein $\vec{k_0}$ is a grating modulation amplitude at any point within the FOV of the grating structure;

$n_2$ is a refractive index of the substrate;

$$\frac{\vec{z} \times \overrightarrow{P_3}}{\left| \vec{z} \times \overrightarrow{P_3} \right|}$$ is the second grating modulation direction.

Embodiment 8. The diffractive optical structure according to any one of embodiments 1 to 7, wherein the in-coupling grating adopts the grating structure, and when the grating structure satisfies the following condition, light from at least partial directions within an incident FOV, after being modulated by the grating structure, produces first-order diffraction only in the first grating modulation direction;

$$\left| \overrightarrow{k_0} \pm \frac{\lambda}{P_3 \cdot \sin\theta} \cdot \frac{\vec{z} \times \overrightarrow{P_2}}{\left| \vec{z} \times \overrightarrow{P_2} \right|} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\overrightarrow{k_0}$ is a grating modulation amplitude at any point within the FOV of the grating structure;
$n_2$ is a refractive index of the substrate;

$$\frac{\vec{z} \times \overrightarrow{P_2}}{\left| \vec{z} \times \overrightarrow{P_2} \right|}$$ is the first grating modulation direction;

$$\frac{\vec{z} \times \overrightarrow{P_3}}{\left| \vec{z} \times \overrightarrow{P_3} \right|}$$ is the second grating modulation direction.

Embodiment 9. The diffractive optical structure according to any one of embodiments 1 to 8, wherein the turning grating or the out-coupling grating adopts the grating structure, and when the grating structure satisfies the following condition, light from at least partial directions within an incident FOV, after being modulated by the grating structure, does not produce diffraction in the second grating modulation direction;

$$\left| \overrightarrow{k_0} \pm \overrightarrow{k_{IG}} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\overrightarrow{k_0}$ is a grating modulation amplitude at any point within the FOV of the grating structure;
$\overrightarrow{k_{IC}}$ is a grating modulation amplitude of the in-coupling grating;
$n_2$ is a refractive index of the substrate;

$$\frac{\vec{z} \times \overrightarrow{P_3}}{\left| \vec{z} \times \overrightarrow{P_3} \right|}$$ is the second grating modulation direction.

Embodiment 10. The diffractive optical structure according to any one of embodiments 1 to 9, wherein the turning grating or the out-coupling grating adopts the grating structure, and when the grating structure satisfies the following condition, light from at least partial directions within an incident FOV, after being modulated by the grating structure, produces first-order diffraction only in the first grating modulation direction;

$$\left| \vec{k_0} \pm \vec{k_{IG}} \pm \frac{\lambda}{P_3 \cdot \sin\theta} \cdot \frac{\vec{z} \times \vec{P_2}}{\left| \vec{z} \times \vec{P_2} \right|} \pm \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2;$$

wherein $\vec{k_0}$ is a grating modulation amplitude at any point within the FOV of the grating structure;
$\vec{k_{IC}}$ is a grating modulation amplitude of the in-coupling grating;
$n_2$ is a refractive index of the substrate;

$$\frac{\vec{z} \times \vec{P_2}}{\left| \vec{z} \times \vec{P_2} \right|}$$ is the first grating modulation direction;

$$\frac{\vec{z} \times \vec{P_3}}{\left| \vec{z} \times \vec{P_3} \right|}$$ is the second grating modulation direction.

Embodiment 11. The diffractive optical structure according to any one of embodiments 1 to 10, wherein the out-coupling grating adopts the grating structure, and when the grating structure satisfies at least one of the following conditions, light from at least partial directions within an incident FOV, after being modulated by the grating structure, does not produce diffraction in the second grating modulation direction;

$$\left| \vec{k_0} \pm \vec{k_{IG}} \pm \vec{k_{FG}} \pm \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2;$$

$$\left| \vec{k_0} \pm \vec{k_{IG}} \pm \vec{k_{FG}} \pm \vec{k_{OG}} \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2;$$

$$\left| \vec{k_0} \pm \vec{k_{OG}} \pm \frac{\lambda}{P_2 \cdot \sin\theta} \cdot \frac{\vec{z} \times \vec{P_3}}{\left| \vec{z} \times \vec{P_3} \right|} \right| > \frac{2\pi}{\lambda} * n_2;$$

wherein $\vec{k_0}$ is a grating modulation amplitude at any point within the FOV of the grating structure;
$\vec{k_{IC}}$ is a grating modulation amplitude of the in-coupling grating;
$\vec{k_{FG}}$ is a grating modulation amplitude of the turning grating;
$\vec{k_{OG}}$ is a grating modulation amplitude of the out-coupling grating;
$n_2$ is a refractive index of the substrate;

$$\frac{\vec{z} \times \vec{P_2}}{\left| \vec{z} \times \vec{P_2} \right|}$$ is the first grating modulation direction;

$$\frac{\vec{z} \times \vec{P_3}}{\left| \vec{z} \times \vec{P_3} \right|}$$ is the second grating modulation direction.

Embodiment 12. The diffractive optical structure according to any one of embodiments 1 to 11, wherein the out-coupling grating adopts the grating structure, and when the grating structure satisfies at least one of the following conditions, light from at least partial directions within an incident FOV, after being modulated by the grating structure, produces first-order diffraction only in the first grating modulation direction;

$$\left| \vec{k}_0 \pm \vec{k}_{IG} \pm \vec{k}_{FG} \pm \frac{\lambda}{P_3 \cdot \sin\theta} \cdot \frac{\vec{z} \times \vec{P}_2}{\left| \vec{z} \times \vec{P}_2 \right|} \pm \frac{\lambda}{P_2 \cdot \sin\theta} \cdot \frac{\vec{z} \times \vec{P}_3}{\left| \vec{z} \times \vec{P}_3 \right|} \right| > \frac{2\pi}{\lambda} * n_2;$$

$$\left| \vec{k}_0 \pm \vec{k}_{IG} \pm \vec{k}_{FG} \pm \vec{k}_{OG} \pm \frac{\lambda}{P_3 \cdot \sin\theta} \cdot \frac{\vec{z} \times \vec{P}_2}{\left| \vec{z} \times \vec{P}_2 \right|} \pm \frac{\lambda}{P_2 \cdot \sin\theta} \cdot \frac{\vec{z} \times \vec{P}_3}{\left| \vec{z} \times \vec{P}_3 \right|} \right| > \frac{2\pi}{\lambda} * n_2;$$

$$\left| \vec{k}_0 \pm \vec{k}_{OG} \pm \frac{\lambda}{P_3 \cdot \sin\theta} \cdot \frac{\vec{z} \times \vec{P}_2}{\left| \vec{z} \times \vec{P}_2 \right|} \pm \frac{\lambda}{P_2 \cdot \sin\theta} \cdot \frac{\vec{z} \times \vec{P}_3}{\left| \vec{z} \times \vec{P}_3 \right|} \right| > \frac{2\pi}{\lambda} * n_2;$$

wherein $\vec{k}_0$ is a grating modulation amplitude at any point within the FOV of the grating structure;
$\vec{k}_{IC}$ is a grating modulation amplitude of the in-coupling grating;
$\vec{k}_{FG}$ is a grating modulation amplitude of the turning grating;
$\vec{k}_{OG}$ is a grating modulation amplitude of the out-coupling grating;
$n_2$ is a refractive index of the substrate;

$\dfrac{\vec{z} \times \vec{P}_2}{\left| \vec{z} \times \vec{P}_2 \right|}$ is the first grating modulation direction;

$\dfrac{\vec{z} \times \vec{P}_3}{\left| \vec{z} \times \vec{P}_3 \right|}$ is the second grating modulation direction.

Embodiment 13. The diffractive optical structure according to any one of embodiments 1 to 12, wherein the grating unit is a columnar structure provided on the surface of the substrate, and a linewidth duty cycle of the grating unit in the first direction is DC, wherein 0 < DC < 1.

Embodiment 14. The diffractive optical structure according to any one of embodiments 1 to 13, wherein the grating unit is a hole structure provided on the surface of the substrate, and a linewidth duty cycle of the grating unit in the first direction is DC, wherein 0 < DC < 1.

Embodiment 15. The diffractive optical structure according to any one of embodiments 1 to 14, wherein the grating unit comprises one or more sub-gratings.

Embodiment 16. The diffractive optical structure according to any one of embodiments 1 to 15, wherein the diffractive optical structure is an optical waveguide device.

Embodiment 17. An optical display device, comprising:

an image source; and
the diffractive optical structure according to embodiment 1.

Although some specific embodiments of the present disclosure have been described in detail through examples, those skilled in the art should understand that the above examples are for illustration only and are not intended to limit the scope of the present disclosure. Those skilled in the art should understand that the above embodiments can be modified without departing from the scope or spirit of the present disclosure. The scope of the present disclosure is defined by the accompanying claims.

**Claims**

1. A diffractive optical structure, comprising a substrate (1) and a grating structure (5) provided on the substrate (1), the grating structure (5) comprising a plurality of grating units (51) periodically arranged in a tiled pattern on a surface of the substrate (1) along both a first direction and a second direction;

   the grating structure (5) has a first grating modulation direction and a second grating modulation direction, the first grating modulation direction is perpendicular to the first direction, and a grating modulation amplitude in the first grating modulation direction is $\Delta E$, $\Delta E = 1/(P_3*\sin\theta)$, wherein $P_3$ is a period of the grating structure (5) in the second direction, and $\theta$ is an included angle between the first direction and the second direction;
   light incident on the grating structure produces diffraction only in the first grating modulation direction and does not produce diffraction in the second grating modulation direction;
   **characterized in that**
   the diffractive optical structure comprises an in-coupling grating (2), an out-coupling grating (3), and a turning grating (4);
   at least one of the in-coupling grating (2), the out-coupling grating (3), and the turning grating (4) comprises the grating structure in at least a partial region thereof;
   the in-coupling grating (2) adopts the grating structure (5), and when the grating structure (5) satisfies the following condition, light from at least partial directions within an incident FOV, after being modulated by the grating structure (5), does not produce diffraction in the second grating modulation direction;

$$\left| \vec{k_0} \pm \frac{\lambda}{P_2 \cdot \sin\theta} \cdot \frac{\vec{z} \times \vec{P_3}}{|\vec{z} \times \vec{P_3}|} \right| > \frac{2\pi}{\lambda} * n_2;$$

   wherein $\vec{k_0}$ is a grating modulation amplitude at any point within the FOV of the grating structure (5);
   $n_2$ is a refractive index of the substrate (1);
   $\dfrac{\vec{z} \times \vec{P_3}}{|\vec{z} \times \vec{P_3}|}$ is the second grating modulation direction.

2. The diffractive optical structure according to claim 1, **characterized in that** a period of the grating structure (5) in the first direction is $P_2$, and $P_2 < P_3$.

3. The diffractive optical structure according to claim 1 or 2, **characterized in that** the included angle $\theta$ between the first direction and the second direction satisfies $0 < \theta \leq 90°$.

4. The diffractive optical structure according to any one of claims 1 to 3, **characterized in that** at least a partial region of the turning grating (4) is the grating structure (5); or,

   the in-coupling grating (2) and the turning grating (4) are the grating structure (5); or,
   the in-coupling grating (2), a partial region of the out-coupling grating (3), and the turning grating (4) are the grating structure (5).

5. The diffractive optical structure according to any one of claims 1 to 4, **characterized in that** a period $P_2$ of the grating structure (5) in the first direction is less than 300 nm, and light, after being diffracted by the grating structure (5), produces first-order diffraction only in the first grating modulation direction and does not produce diffraction in the second grating modulation direction.

6. The diffractive optical structure according to any one of claims 1 to 5, **characterized in that** the in-coupling grating (2) adopts the grating structure (5), and when the grating structure (5) satisfies the following condition, light from at least partial directions within an incident FOV, after being modulated by the grating structure (5), produces first-order diffraction only in the first grating modulation direction;

$$\left| \overrightarrow{k_0} \pm \frac{\lambda}{P_3 \cdot \sin\theta} \cdot \frac{\vec{z} \times \overrightarrow{P_2}}{\left| \vec{z} \times \overrightarrow{P_2} \right|} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\overrightarrow{k_0}$ is a grating modulation amplitude at any point within the FOV of the grating structure (5);
$n_2$ is a refractive index of the substrate (1);

$\dfrac{\vec{z} \times \overrightarrow{P_2}}{\left| \vec{z} \times \overrightarrow{P_2} \right|}$  is the first grating modulation direction;

$\dfrac{\vec{z} \times \overrightarrow{P_3}}{\left| \vec{z} \times \overrightarrow{P_3} \right|}$  is the second grating modulation direction.

7.  The diffractive optical structure according to any one of claims 1 to 6, **characterized in that** the turning grating (4) or the out-coupling grating (3) adopts the grating structure (5), and when the grating structure (5) satisfies the following condition, light from at least partial directions within an incident FOV, after being modulated by the grating structure (5), does not produce diffraction in the second grating modulation direction;

$$\left| \overrightarrow{k_0} \pm \overrightarrow{k_{IG}} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\overrightarrow{k_0}$ is a grating modulation amplitude at any point within the FOV of the grating structure (5);
$\overrightarrow{k_{IC}}$ is a grating modulation amplitude of the in-coupling grating (2);
$n_2$ is a refractive index of the substrate (1);

$\dfrac{\vec{z} \times \overrightarrow{P_3}}{\left| \vec{z} \times \overrightarrow{P_3} \right|}$  is the second grating modulation direction.

8.  The diffractive optical structure according to any one of claims 1 to 7, **characterized in that** the turning grating (4) or the out-coupling grating (3) adopts the grating structure (5), and when the grating structure (5) satisfies the following condition, light from at least partial directions within an incident FOV, after being modulated by the grating structure (5), produces first-order diffraction only in the first grating modulation direction;

$$\left| \overrightarrow{k_0} \pm \overrightarrow{k_{IG}} \pm \frac{\lambda}{P_3 \cdot \sin\theta} \cdot \frac{\vec{z} \times \overrightarrow{P_2}}{\left| \vec{z} \times \overrightarrow{P_2} \right|} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2;$$

wherein $\overrightarrow{k_0}$ is a grating modulation amplitude at any point within the FOV of the grating structure (5);
$\overrightarrow{k_{IC}}$ is a grating modulation amplitude of the in-coupling grating (2);
$n_2$ is a refractive index of the substrate (1);

$\dfrac{\vec{z} \times \overrightarrow{P_2}}{\left| \vec{z} \times \overrightarrow{P_2} \right|}$  is the first grating modulation direction;

$$\dfrac{\vec{z}\times\overrightarrow{P_3}}{\left|\vec{z}\times\overrightarrow{P_3}\right|}$$ is the second grating modulation direction.

9. The diffractive optical structure according to any one of claims 1 to 8, **characterized in that** the out-coupling grating (3) adopts the grating structure, and when the grating structure (5) satisfies at least one of the following conditions, light from at least partial directions within an incident FOV, after being modulated by the grating structure (5), does not produce diffraction in the second grating modulation direction;

$$\left|\overrightarrow{k_0}\pm\overrightarrow{k_{IG}}\pm\overrightarrow{k_{FG}}\pm\dfrac{\lambda}{P_2\cdot\sin\theta}\cdot\dfrac{\vec{z}\times\overrightarrow{P_3}}{\left|\vec{z}\times\overrightarrow{P_3}\right|}\right|>\dfrac{2\pi}{\lambda}*n_2;$$

$$\left|\overrightarrow{k_0}\pm\overrightarrow{k_{IG}}\pm\overrightarrow{k_{FG}}\pm\overrightarrow{k_{OG}}\dfrac{\lambda}{P_2\cdot\sin\theta}\cdot\dfrac{\vec{z}\times\overrightarrow{P_3}}{\left|\vec{z}\times\overrightarrow{P_3}\right|}\right|>\dfrac{2\pi}{\lambda}*n_2;$$

$$\left|\overrightarrow{k_0}\pm\overrightarrow{k_{OG}}\pm\dfrac{\lambda}{P_2\cdot\sin\theta}\cdot\dfrac{\vec{z}\times\overrightarrow{P_3}}{\left|\vec{z}\times\overrightarrow{P_3}\right|}\right|>\dfrac{2\pi}{\lambda}*n_2;$$

wherein $\overrightarrow{k_0}$ is a grating modulation amplitude at any point within the FOV of the grating structure (5);
$\overrightarrow{k_{IC}}$ is a grating modulation amplitude of the in-coupling grating (2);
$\overrightarrow{k_{FG}}$ is a grating modulation amplitude of the turning grating (4);
$\overrightarrow{k_{OG}}$ is a grating modulation amplitude of the out-coupling grating (3);
$n_2$ is a refractive index of the substrate (1);

$$\dfrac{\vec{z}\times\overrightarrow{P_2}}{\left|\vec{z}\times\overrightarrow{P_2}\right|}$$ is the first grating modulation direction;

$$\dfrac{\vec{z}\times\overrightarrow{P_3}}{\left|\vec{z}\times\overrightarrow{P_3}\right|}$$ is the second grating modulation direction.

10. The diffractive optical structure according to any one of claims 1 to 9, **characterized in that** the out-coupling grating (3) adopts the grating structure, and when the grating structure (5) satisfies at least one of the following conditions, light from at least partial directions within an incident FOV, after being modulated by the grating structure (5), produces first-order diffraction only in the first grating modulation direction;

$$\left|\overrightarrow{k_0}\pm\overrightarrow{k_{IG}}\pm\overrightarrow{k_{FG}}\pm\dfrac{\lambda}{P_3\cdot\sin\theta}\cdot\dfrac{\vec{z}\times\overrightarrow{P_2}}{\left|\vec{z}\times\overrightarrow{P_2}\right|}\pm\dfrac{\lambda}{P_2\cdot\sin\theta}\cdot\dfrac{\vec{z}\times\overrightarrow{P_3}}{\left|\vec{z}\times\overrightarrow{P_3}\right|}\right|>\dfrac{2\pi}{\lambda}*n_2;$$

$$\left| \overrightarrow{k_0} \pm \overrightarrow{k_{IG}} \pm \overrightarrow{k_{FG}} \pm \overrightarrow{k_{OG}} \pm \frac{\lambda}{P_3 \cdot \sin\theta} \cdot \frac{\vec{z} \times \overrightarrow{P_2}}{\left| \vec{z} \times \overrightarrow{P_2} \right|} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2 ;$$

$$\left| \overrightarrow{k_0} \pm \overrightarrow{k_{OG}} \pm \frac{\lambda}{P_3 \cdot \sin\theta} \cdot \frac{\vec{z} \times \overrightarrow{P_2}}{\left| \vec{z} \times \overrightarrow{P_2} \right|} \pm \frac{\lambda}{P_2 \cdot \sin\theta} \cdot \frac{\vec{z} \times \overrightarrow{P_3}}{\left| \vec{z} \times \overrightarrow{P_3} \right|} \right| > \frac{2\pi}{\lambda} * n_2 ;$$

wherein $\overrightarrow{k_0}$ is a grating modulation amplitude at any point within the FOV of the grating structure (5); $\overrightarrow{k_{IC}}$ is a grating modulation amplitude of the in-coupling grating (2); $\overrightarrow{k_{FG}}$ is a grating modulation amplitude of the turning grating (4); $\overrightarrow{k_{OG}}$ is a grating modulation amplitude of the out-coupling grating (3); $n_2$ is a refractive index of the substrate (1);

$\dfrac{\vec{z} \times \overrightarrow{P_2}}{\left| \vec{z} \times \overrightarrow{P_2} \right|}$ is the first grating modulation direction;

$\dfrac{\vec{z} \times \overrightarrow{P_3}}{\left| \vec{z} \times \overrightarrow{P_3} \right|}$ is the second grating modulation direction.

11. The diffractive optical structure according to any one of claims 1 to 10, **characterized in that** the grating unit (51) is a columnar structure provided on the surface of the substrate (1), and a linewidth duty cycle of the grating unit (51) in the first direction is DC, wherein $0 < DC < 1$.

12. The diffractive optical structure according to any one of claims 1 to 11, **characterized in that** the grating unit (51) is a hole structure provided on the surface of the substrate (1), and a linewidth duty cycle of the grating unit (51) in the first direction is DC, wherein $0 < DC < 1$.

13. The diffractive optical structure according to any one of claims 1 to 12, **characterized in that** the grating unit (51) comprises one or more sub-gratings.

14. The diffractive optical structure according to any one of claims 1 to 13, **characterized in that** the diffractive optical structure is an optical waveguide device.

15. An optical display device, **characterized by** comprising:

an image source; and
the diffractive optical structure according to any one of claims 1 to 14.

**FIG.1**

**FIG.2**

**FIG.3**

**FIG.4**

$P_1$

One-dimensional grating

**FIG.5**

$P_2$

$P_3$

Two-dimensional grating

**FIG.6**

P2

θ

First direction

P3

Second direction

**FIG.7**

$\dfrac{\lambda}{P_1}$

**FIG.8**

$$\frac{\lambda}{P_2 \cdot sin\theta}$$

$$\frac{\lambda}{P_3 \cdot sin\theta}$$

**FIG.9**

$$\frac{\lambda}{P_2 \cdot sin\theta}$$

$$\frac{\lambda}{P_3 \cdot sin\theta}$$

$$\frac{\lambda}{P_2 \cdot sin\theta}$$

**FIG.10**

**FIG.11**

**FIG.12**

**FIG.13**

**FIG.14**

**FIG.15**

**FIG.16**

**FIG.17**

**FIG.18**

EP 4 729 995 A1

**FIG.19**

**FIG.20**

**.FIG.21**

**FIG.22**

**FIG.23**

**FIG.24**

**FIG.25**

**FIG.26**

Europäisches
Patentamt

European
Patent Office

Office européen
des brevets

# EUROPEAN SEARCH REPORT

**Application Number**

EP 25 20 1344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/125102 A1 (SHANGHAI NORTH OCEAN TECH CO LTD [CN]) 20 June 2024 (2024-06-20) * the whole document * ----- | 1-15 | INV. G02B5/18 G02B27/00 G02B27/01 G02B27/42 |
| A | CN 118 377 081 A (GOERTEK OPTICAL TECH CO LTD) 23 July 2024 (2024-07-23) * abstract * * figures 1-22 * * paragraph [0007] - paragraph [0017] * * paragraph [0068] - paragraph [0078] * ----- | 1-15 | |
| A | CN 117 666 138 A (HUAWEI TECH CO LTD) 8 March 2024 (2024-03-08) * the whole document * ----- | 1-15 | |

| | TECHNICAL FIELDS SEARCHED (IPC) |
|---|---|
| | G02B |

The present search report has been drawn up for all claims

| Place of search | Date of completion of the search | Examiner |
|---|---|---|
| Munich | 9 February 2026 | Sittler, Gilles |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

**EP 4 729 995 A1**

## ANNEX TO THE EUROPEAN SEARCH REPORT
## ON EUROPEAN PATENT APPLICATION NO.

EP 25 20 1344

09-02-2026

| Patent document cited in search report | Publication date | Patent family member(s) | | Publication date |
|---|---|---|---|---|
| WO 2024125102 A1 | 20-06-2024 | NONE | | |
| CN 118377081 A | 23-07-2024 | CN | 118377081 A | 23-07-2024 |
| | | US | 12474517 B1 | 18-11-2025 |
| CN 117666138 A | 08-03-2024 | CN | 117666138 A | 08-03-2024 |
| | | EP | 4575610 A1 | 25-06-2025 |
| | | US | 2025208424 A1 | 26-06-2025 |
| | | WO | 2024051788 A1 | 14-03-2024 |